# EUROPÄISCHE PATENTSCHRIFT

(11) **EP 2 189 837 B1**
(45) Veröffentlichungstag und Bekanntmachung des Hinweises auf die Patenterteilung: **06.07.2011**
(21) Anmeldenummer: 09450204.4
(22) Anmeldetag: 28.10.2009
(51) Int. Cl.: G02C 5/22

(54) **Federscharnier zwischen einem Bügelbacken und einem Bügel einer Brille**
Spring hinge between a side piece and an end piece of a pair of glasses
Charnière à ressort entre un tenon et un cintre de lunettes

(30) Priorität: 21.11.2008 AT 18202008
(43) Veröffentlichungstag der Anmeldung: 26.05.2010
(73) Patentinhaber: Redtenbacher Präzisionsteile Ges. M.B.H., 4644 Scharnstein (AT)
(72) Erfinder: Buchegger, Harald, 4644 Scharnstein (AT)
(74) Vertreter: Hübscher, Helmut

(56) Entgegenhaltungen:
- EP-A- 1 821 132
- WO-A-2006/053983
- GB-A- 868 776
- US-B1- 7 033 021

## Beschreibung

Die Erfindung bezieht sich auf ein Federscharnier zwischen einem Bügelbacken und einem Bügel einer Brille mit zwei je einem dieser Brillenteile zugehörigen Scharnierteilen, von denen einer eine Lagergabel mit einer Scharnierachse zur Aufnahme des anderen Scharnierteils bildet, der mit Hilfe eines U-förmigen Gleitstücks in einer Führung verschiebbar geführt ist, und mit einer zwischen den beiden Schenkeln des Gleitstücks angeordneten Schraubenfeder, die sich einerseits an einem die beiden Schenkel verbindenden Steg des Gleitstücks und anderseits an einem Widerlager abstützt, das durch eine koaxial zur Schraubenfeder verlaufende Durchtrittsöffnung des zugehörigen Scharnierteils in ein zur Schraubenfeder koaxiales Muttergewinde der Führung eingreift.

Um ein Federscharnier, dessen Scharnierteile üblicherweise auf der Innenseite des Bügelbackens und des Bügels einer Brille angeordnet sind, verdeckt anzuordnen, ist es bei Kunststoffbrillen bekannt (WO 2006/053983 A1), den eine Lagergabel formenden backenseitigen Scharnierteil in eine Aufnahmetasche des Bügelbackens einzusetzen und auch das den bügelseitigen, federbeaufschlagten Scharnierteil in einer Führung verschiebbar aufnehmende Gehäuse als vom Bügel umschlossenen Einsatz auszubilden, sodass die Scharnierteile im Wesentlichen nur über die Stirnseiten des Bügelbackens bzw. des Bügels vorstehen und bei geöffnetem Bügel nicht erkennbar sind, weil die Stirnseiten des Bügelbackens und des Bügels durch das Federscharnier flächig aneinandergedrückt werden. Es verbleibt lediglich eine für das Verschwenken des bügelseitigen Scharnierteils erforderliche Aussparung auf der Backeninnenseite. Nachteilig ist allerdings, dass die Scharnierachse durch eine Durchtrittsöffnung im Bügelbacken eingesetzt werden muss, was nicht nur Montageschwierigkeiten mit sich bringt, sondern auch die eingesetzte Scharnierachse von außen erkennen lässt.

Zur Sicherstellung einfacher Montagebedingungen ist es bei Federscharnieren außerdem bekannt (AT 502 196 B1), den bügelseitigen Scharnierteil mit einem in eine Gehäuseausnehmung eingreifenden, U-förmigen Gleitstück zu versehen, das zwischen seinen beiden Schenkeln eine Schraubenfeder aufnimmt, die sich einerseits am die beiden Schenkel des Gleitstücks verbindenden Steg und anderseits an einem Widerlager abstützt, das in ein zur Schraubenfeder koaxiales Muttergewinde des Gehäuses eingeschraubt wird, und zwar durch eine koaxiale Durchtrittsöffnung des bügelseitigen Scharnierteils. Eine solche Konstruktion stellt eine vorteilhafte Voraussetzung für ein in Umfangsrichtung geschlossenes Gehäuse dar, das ohne Schwierigkeiten von der Stirnseite her in einen Brillenbügel eingesetzt werden kann. Für den verdeckten Einsatz eines solchen bekannten Federscharniers bleiben jedoch die im Bereich des Bügelbackens auftretenden Schwierigkeiten ungelöst. Gemäß einem nicht vorveröffentlichten Stand der Technik wird in Weiterbildung dieses bekannten Federscharniers vorgeschlagen, den backenseitigen Scharnierteil mit der die Scharnierachse aufnehmenden Lagergabel in einer seitlich geschlossene Aufnahmetasche des Bügelbackens zu verankern, sodass die Scharnierachse nicht durch den Bügelbacken hindurch eingesetzt werden muss. Dies macht jedoch den nachträglichen Einsatz des bereits mit dem backenseitigen Schamierteils gelenkig verbundenen, bügelseitigen Scharnierteils in das bügelseitige Gehäuse erforderlich, was nur möglich ist, wenn der Bügelbacken in der eingeschwenkten Stellung des Bügels einen zur Schraubenfeder koaxialen Durchtritt für das Widerlager freigibt, sodass das Widerlager für die Schraubenfeder in eine entsprechende Gewindebohrung im bügelseitigen Scharniergehäuse eingeschraubt werden kann.

Der Erfindung liegt somit die Aufgabe zugrunde, ein Federscharnier zwischen einem Bügel und einem Bügelbacken der eingangs geschilderten Art so auszugestalten, dass eine verdeckte Anordnung möglich wird, und zwar unter der Voraussetzung, dass der den Scharnierteil mit der Lagergabel aufnehmende Brillenteil weder mit einer Durchtrittsöffnung für die Scharnierachse noch mit einem Durchtritt für das Widerlager versehen werden muss.

Die Erfindung löst die gestellte Aufgabe dadurch, dass der die Lagergabel bildende Scharnierteil einen in eine seitlich geschlossene Aufnahmetasche des zugehörigen Brillenteils lösbar eingesetzten Einsatz bildet und einen die Aufnahmetasche (17) abschließenden Befestigungsflansch (18) aufweist, der am zugehörigen Brillenteil (1) mit Hilfe von Schrauben (19) befestigt ist..

Wegen der seitlich geschlossenen Aufnahmetasche des Brillenteils wird die Scharnierachse lediglich in der Lagergabel des backenseitigen Scharnierteils gehalten, sodass Durchtrittsbohrungen im Bügelbacken zum Einsetzen der Scharnierachse entfallen. Da aber der Scharnierteil mit der Lagergabel lösbar in der Aufnahmetasche des zugehörigen Brillenteils befestigt ist, kann er auch nach dem Einsetzen des mit ihm gelenkig verbundenen anderen Scharnierteils in das zugehörige Gehäuse in der Aufnahmetasche verankert werden, sodass der die Aufnahmetasche bildenden Brillenteil ohne Rücksicht auf die Anforderungen hinsichtlich des Einsetzens des Widerlagers für die Schraubenfeder ins Gehäuse des anderen Brillenteils ausgestaltet werden kann, und zwar mit dem zusätzlichen Vorteil einer Montagevereinfachung. Mit der Möglichkeit, die beiden Scharnierteile nach dem Einsetzen des das Gleitstück bildenden, federbeaufschlagten Scharnierteils in seine Führung durch ein Einschieben der Scharnierachse zu verbinden, entfällt die Notwendigkeit, für einen freien Zugang des Widerlagers für die Schraubenfeder zur Durchtrittsbohrung im Gehäuse an der Scharnierachse vorbei zu sorgen, sodass hiefür sonst erforderliche Ausnehmungen der Scharnierachse überflüssig werden. Besonders einfache Konstruktionsverhältnisse ergeben sich dabei, weil der die Lagergabel bildende Scharnierteil einen die Aufnahmetasche abschließenden Befestigungsflansch aufweist, der am zugehörigen Brillenteil mit Hilfe von Schrauben befestigt ist.

In der Zeichnung ist der Erfindungsgegenstand beispielsweise dargestellt. Es zeigen
- Fig. 1: ein erfindungsgemäßes Federscharnier einer Brille in einem schemati- schen Längsschnitt bei abgewinkeltem Bügel und
- Fig. 2: einen Schnitt nach der Linie II-II der Fig. 1.

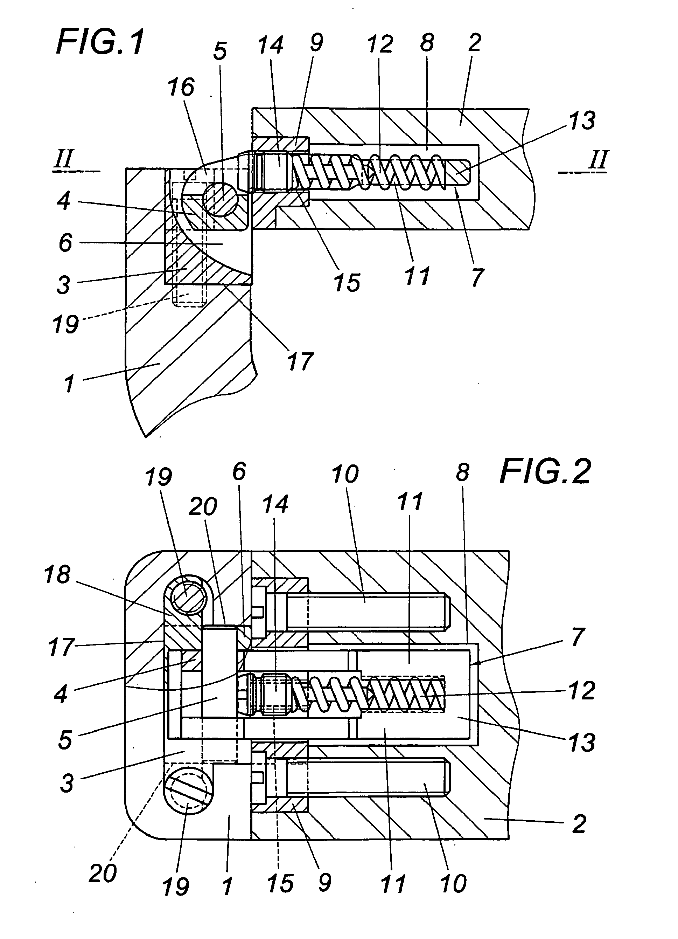

Das dargestellte Federscharnier weist zwei je einem Brillenteil 1, 2, nämlich einem Bügelbacken und einem Bügel, zugehörige Scharnierteile 3, 4 auf, die mit Hilfe einer Scharnierachse 5 gelenkig miteinander verbunden sind. Der Scharnierteil 3 bildet dabei eine Lagergabel 6, in die der Scharnierteil 4 eingreift. Der üblicherweise bügelseitige Scharnierteil 4, der jedoch auch dem Bügelbacken zugeordnet sein kann, trägt ein U-förmiges Gleitstück 7, das in einer eine Aufnahmeöffnung 8 im zugehörigen Brillenteil 2 abschließenden Führung 9 verschiebbar geführt ist. Diese Führung 9 wird mit Hilfe von Befestigungsschrauben 10 auf der Stirnseite des Bügelteils 2 befestigt. Zwischen den Schenkeln 11 des Gleitstücks 7 ist eine Schraubenfeder 12 vorgesehen, die sich einerseits an einem die beiden Schenkel 11 miteinander verbindenden Steg 13 und anderseits an einem Widerlager 14 abstützt, das in ein zur Schraubenachse koaxiales Muttergewinde 15 der Führung 9 eingeschraubt wird, und zwar durch eine zur Schraubenfeder 12 koaxial verlaufenden Durchtrittsöffnung 16, wie dies der Fig. 1 entnommen werden kann.

Der dem Brillenteil 1, üblicherweise ein Bügelbacken, zugehörige Scharnierteil 3 bildet einen in eine Aufnahmetasche 17 dieses Brillenteils 1 eingreifenden Einsatz, der in der Aufnahmetasche 17 lösbar befestigt ist. Zu diesem Zweck bildet der Scharnierteil 3 einen die Aufnahmetasche 17 stirnseitig abschließenden Befestigungsflansch 18, der mit Hilfe von Schrauben 19 am Brillenteil 1 festgeschraubt wird. Wie sich aus der Fig. 2 entnehmen lässt, ist die Aufnahmetasche 17 seitlich geschlossen, sodass die Scharnierachse 5 zwischen den Seitenwangen 20 der Aufnahmetasche 17 axial festgehalten wird.

Zur Montage des Federscharniers wird zunächst der Scharnierteil 4 mit der in das U-förmige Gleitstück 7 eingesetzten Schraubenfeder 12 in die Führung 9 eingeführt und das Widerlager 14 für die Schraubenfeder 12 in das Muttergewinde 15 eingeschraubt. Danach kann der Scharnierteil 3 mit dem Scharnierteil 4 gelenkig verbunden werden, indem die Scharnierachse 5 durch die fluchtenden Lagerbohrungen dieser Scharnierteile 3, 4 eingeschoben wird. Abschließend wird der Scharnierteil 3 in die Aufnahmetasche17 eingesetzt und mit dem zugehörigen Brillenteil 1 mit Hilfe der Schrauben 19 verbunden.

## Patentansprüche

1. Federscharnier zur Montage zwischen einem Bügelbacken und einem Bügel einer Brille mit zwei je einem dieser Brillenteile (1, 2) zugehörigen Scharnierteilen (3, 4), von denen einer eine Lagergabel (6) mit einer Scharnierachse (5) zur Aufnahme des anderen Scharnierteils (4) bildet, der mit Hilfe eines U-förmigen Gleitstücks (7) in einer Führung (9) verschiebbar geführt ist, und mit einer zwischen den beiden Schenkeln (11) des Gleitstücks (7) angeordneten Schraubenfeder (12), die sich einerseits an einem die beiden Schenkel (11) verbindenden Steg (13) des Gleitstücks (7) und anderseits an einem Widerlager (14) abstützt, das durch eine koaxial zur Schraubenfeder (12) verlaufende Durchtrittsöffnung (16) des zugehörigen Scharnierteils (4) in ein zur Schraubenfeder (12) koaxiales Muttergewinde (15) der Führung (9) eingreift, **dadurch gekennzeichnet, dass** der die Lagergabel (6) bildende Scharnierteil (3) einen in eine seitlich geschlossene Aufnahmetasche (17) des zugehörigen Brillenteils (1) lösbar einsetzbaren Einsatz bildet und einen die Aufnahmetasche (17) abschließenden Befestigungsflansch (18) aufweist, der am zugehörigen Brillenteil (1) mit Hilfe von Schrauben (19) befeshigbar ist.

## Claims

1. Spring hinge for mounting between an earpiece bracket and an earpiece of a pair of spectacles having two hinge parts (3, 4) appertaining to a respective one of these spectacle parts (1, 2), one of which hinge parts forms a bearing fork (6) having a hinge axis (5) for receiving the other hinge part (4) which is displaceably guided with the aid of a U-shaped sliding piece (7) in a guide (9), and having a helical spring (12) disposed between the two limbs (11) of the sliding piece (7), which helical spring is supported on the one hand on a web (13) of the sliding piece (7) connecting the two limbs (11), and on the other hand on a counter bearing (14) which engages through a through-opening (16), which extends coaxially to the helical spring (12), of the associated hinge part (4) into a nut thread (15), which is coaxial to the helical spring (12), in the guide (9), **characterised in that** the hinge part (3) forming the bearing fork (6) forms an insert, which can be releasably inserted into a laterally closed receiving pocket (17) of the associated spectacle part (1), and has a fastening flange (18) which closes the receiving pocket (17) and which can be fastened to the associated spectacle part (1) with the aid of screws (19).

## Revendications

1. Charnière à ressort, pour montage entre un tenon et une branche de lunettes, avec deux parties de charnière (3, 4), appartenant chacune à l'une de ces parties de lunettes (1, 2), dont l'une forme une fourche de palier (6) avec un axe de charnière (5), pour recevoir l'autre partie de charnière (4), guidée de manière déplaçable dans un guidage (9) à l'aide d'une pièce de glissement (7) en forme de U, et avec un ressort hélicoïdal (12) disposé entre les deux branches (11) de la pièce de glissement (7), prenant appui, d'une part, sur une nervure (13), reliant les deux branches (11), de la pièce de glissement (7) et, d'autre part, sur un contre-palier (14), s'engageant, par une ouverture de passage (16), s'étendant coaxialement au ressort hélicoïdal (12), de la partie de charnière (4) afférente, dans un filetage d'écrou (15), coaxial au ressort hélicoïdal (12), du guidage (9), **caractérisé en ce que** la partie de charnière (3), formant la fourche de palier (6), forme un insert susceptible d'être inséré de manière désolidarisable dans une poche de réception (17), fermée latéralement, de la partie de lunette (1) afférente et présente une bride de fixation (18), fermant la poche de réception (17), susceptible d'être fixée, à l'aide de vis (19), sur la partie de lunette (1) afférente.
